# EUROPÄISCHE PATENTSCHRIFT

(11) **EP 4 274 969 B1**
(45) Veröffentlichungstag und Bekanntmachung des Hinweises auf die Patenterteilung: **18.11.2026**
(21) Anmeldenummer: 22705711.4
(22) Anmeldetag: 10.01.2022
(51) Int. Cl.: F16B 5/06, E04B 1/26, E04B 1/343, E04B 1/58, E04B 1/24

(54) **BAUSATZ FÜR DIE KONSTRUKTION EINES BAUWERKS**
KIT FOR THE CONSTRUCTION OF A STRUCTURE
KIT POUR LA CONSTRUCTION D'UNE STRUCTURE

(30) Priorität: 11.01.2021 DE 202021100079 U
(43) Veröffentlichungstag der Anmeldung: 15.11.2023
(73) Patentinhaber: Da Silva Lopes Vieira, Thomaz, 32756 Detmold (DE); Makebrandt, Mona, 32756 Detmold (DE)
(72) Erfinder: DA SILVA LOPES VIEIRA, Thomaz, 32756 Detmold (DE)
(74) Vertreter: Kayser, Christoph
(86) Internationale Anmeldenummer: PCT/DE2022/000001
(87) Internationale Veröffentlichungsnummer: WO 2022/148512

(56) Entgegenhaltungen:
- EP-A1- 0 593 407
- DE-A1- 102010 024 174
- US-A1- 2017 159 290
- US-A1- 2019 100 910

## Beschreibung

Die vorliegende Erfindung betrifft einen Bausatz für die Konstruktion eines Bauwerks, mit einer Mehrzahl von Bauteilen, die miteinander verbunden werden können, um ein statisch bestimmtes Bauwerk zu errichten, wobei wenigstens ein plattenförmiges V-Bauteil und wenigsten zwei plattenförmige H-Bauteile der Mehrzahl von plattenförmigen Bauteilen mittels Steckverbindung untereinander verbunden werden können, wobei jedes V-Bauteil wenigstens eine Steckseite aufweist, an der wenigstens ein in Richtung einer Schließstellung vorspannbares Riegelelement mit einem Riegelkopf ausgebildet ist in den wenigstens zwei plattenförmigen H-Bauteilen jeweils ein erster und ein zweiter Riegelschlitz ausgebildet ist, durch den jeweils eines der vorgespannten Riegelelemente wenigstens eines der V-Bauteile hindurchgreifen kann.

Solche Bausätze sind aus dem Stand der Technikbekannt. Aus EP 0 593 407 A1 ist zum Beispiel ein Bausatz bekannt, der V-Bauteile und H-Bauteile aufweist, die über in Richtung einer Schließstellung vorgespannte Riegelelemente miteinander lösbar verbunden sind. Die Verbindungsstruktur lässt nur eine immer gleiche Schichtung der Strukturelemente übereinander zu. Es entsteht eine Rahmenstruktur aus einer Mehrzahl gleichförmiger Rahmen. Variationen sind nicht möglich, so dass der Bausatz nur einen sehr beschränkten Umfang von Variationen zulässt.

Aus DE 10 2010 024174 A1 ist eine lösbare Verbindung von plattenförmigen Sperrholzteilen an einer Dekorationsfigur bekannt. Offenbart ist ein in eine Schließstellung vorgespanntes Riegelelement an einem V-Bauteil, das durch eine passende Öffnung in einem H-Bauteil durchgreift und mit diesem eine lösbare aber feste Verbindung herstellt. Größere Strukturen können mit den offenbarten Bauteilen und der beschriebenen Verbindung nicht hergestellt werden.

Aus US 2017/159290 A1 ist ein Bausatz bekannt, mit dem Gebäude errichtet werden können. Offenbart sind V-Bauteile als Teil einer Wandkonstruktion 200, die mehrfach übereinander mit V-Bauteilen verbunden sind. H-Bauteile dienen als Bodenstruktur 200 und somit als unterer Abschluss einer Säule aus mehreren V-Bauteilen. H-Bauteile sind nicht Teil der Wandkonstruktion. Es entsteht so ein Rahmenwerk aus Rahmen mit einer großen lichten Höhe zwischen der Bodenstruktur und einer Dachstruktur 300 oder weiteren Bodenstruktur 100 und einer sehr kleinen lichten Weite. Eine Variation der Weite ist mit diesem Basatz nicht möglich.

US 2019/100910 A1 ist ein Bausatz bekannt, mit dem jedes V-Bauteil mit jedem H-Bauteil lösbar verbunden ist. Das bedeutet, dass das komplette Rahmenwerk auseinandergenommen werden muss, wenn eine Änderung herbeigeführt werden soll.

Darüber hinaus gibt es Stand der Technik, mit dem Nachteil, dass bei diesem für die Erlangung einer statischen Bestimmtheit Verbindungstechnik zum Einsatz kommt, die entweder materialfremd ist, also nicht aus dem Material der plattenförmigen Bauteile besteht, oder kleinteilig aufeinander abgestimmt sein muss und daher unabhängig von den eigentlichen Bauteilen vorgehalten und bereitgestellt werden muss.

Die Aufgabe der vorliegenden Erfindung ist daher, einen eingangs genannten Bausatz derart weiter zu entwickeln, dass eine separate Verbindungstechnik für eingesetzte Bauteile im Wesentlichen entfallen kann.

Die Aufgabe wird dadurch gelöst, dass die Steckseiten des V-Bauteils derart ausgebildet sind, dass die Riegelköpfe durch zwei in den H-Bauteilen fluchtend übereinander angeordnete Riegelschlitze der zweilagig angeordneten H-Bauteile hindurchgreifen können.

Mit der vorliegenden Erfindung wird zwischen wenigstens einem plattenförmigen V-Bauteil und wenigstens zwei plattenförmigen H-Bauteilen eine durch die Vorspannung der Riegeleinrichtung feste Steckverbindung erzeugt. Die Vorspannung in Richtung der Schließstellung verhindert, dass sich die Steckverbindung selbsttätig lösen kann. Weitere Befestigungselemente aus dem Bereich der Verbindungstechnik werden nicht benötigt.

Ein weiterer Vorteil der vorliegenden Erfindung ist, dass in den wenigstens zwei plattenförmigen H-Bauteilen jeweils ein erster und ein zweiter Riegelschlitz ausgebildet ist, durch den jeweils die vorgespannte Riegeleinrichtung wenigstens eines der V-Bauteile hindurchgreifen kann. Bei dieser Steckverbindung bildet die Riegeleinrichtung somit einen Bolzen, der in eine schlitzförmige Aufnahme einführbar ist.

Ein weiterer Vorteil der vorliegenden Erfindung ist, dass die wenigstens zwei plattenförmigen H-Bauteile horizontal übereinander angeordnetwerden, derart, dass die Riegelschlitze fluchtend übereinanderliegen. Durch die horizontal übereinander angeordneten plattenförmigen H-Bauteile können unterschiedliche Einheiten aus V-Bauteilen und H-Bauteilen übereinander oder nebeneinander zu einer übergeordneten Einheit mittels der Steckverbindung verbunden werden.

Ein weiterer Vorteil der vorliegenden Erfindung ist, dass die wenigstens zwei plattenförmigen H-Bauteile horizontal nebeneinander angeordnet werden können, derart, dass die Riegelschlitze horizontal nebeneinander angeordnet sind. Durch die Anordnung der plattenförmigen H-Bauteile nebeneinander können Einheiten aus einem V-Bauteil und zwei plattenförmigen H-Bauteilen um weitere Einheiten zu einer Gesamteinheit erweitert werden. Durch die kombinierte Anordnung von wenigstens zwei plattenförmigen H-Bauteilen übereinander und wenigstens zwei plattenförmigen H-Bauteilen nebeneinander kann die Erweiterung einer Einheit aus einem H-Bauteil und wenigstens zwei plattenförmigen H-Bauteilen um weitere Einheiten in wenigstens zwei Richtungen erweitert werden.

Ein weiterer Vorteil der vorliegenden Erfindung ist, dass die Riegelschlitze wenigstens einen kreuzförmigen Doppel-Riegelschlitz umfassen. Dadurch können V-Bauteile in ihrer plattenförmigen Ausrichtung um 90° verdreht angeordnet werden.

Ein weiterer Vorteil der vorliegenden Erfindung ist, dass die wenigstens zwei horizontal nebeneinander angeordneten plattenförmigen H-Bauteile eine unterschiedliche Länge haben, wobei eine Fuge zwischen den wenigstens zwei horizontal nebeneinander angeordneten plattenförmigen H-Bauteilen versetzt zu einer Fuge zwischen zwei über den wenigstens zwei horizontal nebeneinander angeordneten plattenförmigen H-Bauteilen angeordneten H-Bauteilen ist. Durch die versetzte Anordnung der übereinander angeordneten H-Bauteile wird, wie bei einem Mauerwerk, ein Verbund der doppelt übereinander angeordneten und horizontal erweiterten Einheiten aus einem V-Bauteil und wenigstens zwei H-Bauteilen optimiert.

Ein weiterer Vorteil der vorliegenden Erfindung ist, dass Eckbauteile vorgesehen sind, wobei ein Eckbauteil jeweils ein V-Bauteil mit einem anderen V-Bauteil in einer vertikalen Ebene verbinden kann. Dadurch ist es möglich, eine Einheit aus einem V-Bauteil und wenigstens zwei H-Bauteilen in einer Ebene, aber in einer anderen Richtung zu erweitern.

Ein weiterer Vorteil der vorliegenden Erfindung ist, dass das V-Bauteil spiegelsymmetrisch zu einer Mittellängsachse ML ausgebildet ist. Dadurch können Einheiten aus einem V-Bauteil und wenigstens zwei H-Bauteilen in wenigstens zwei Richtungen, insbesondere aber in vier Richtungen, erweitert bzw. vervielfältigt werden.

Ein weiterer Vorteil der vorliegenden Erfindung ist, dass jedes V-Bauteil spiegelsymmetrisch zu einer Mittelquerachse MQ ausgebildet ist. Dadurch ergibt sich die Möglichkeit, eine Einheit aus einem V-Bauteil und wenigstens zwei H-Bauteilen in zwei weiteren Richtungen zu erweitern und zu vervielfältigen.

Weitere Vorteile der vorliegenden Erfindung ergeben sich aus den weiteren Merkmalen der Unteransprüche. Eine Ausführungsform der vorliegenden Erfindung wird im Folgenden anhand der Zeichnungen näher beschrieben. Es zeigen:
Fig. 1 eine schematische Explosionsdarstellung von fünf V-Bauteilen und fünf H-Bauteilen gemäß vorliegender Erfindung;
Fig. 2 Darstellung der Bauteile aus Fig. 1 in einem weiteren Entwicklungsschritt;
Fig. 3 eine schematische Darstellung der Bauteile aus Fig. 2 in einem weiteren Entwicklungsschritt;
Fig. 4 eine schematische Detailansicht einer Verbindungsstelle zwischen zwei übereinanderliegenden H-Bauteilen und nebeneinanderliegenden H-Bauteilen;
Fig. 5 eine schematische Darstellung der Bauteile aus Fig. 3 in einem weiteren Entwicklungsschritt;
Fig. 6 eine schematische Detailansicht im Querschnitt durch eine Verbindungsstelle zwischen einem V-Bauteil und zwei übereinanderliegenden H-Bauteilen;
Fig. 7 eine schematische Darstellung einer Montagesituation eines Wandbauteils in einem ersten Entwicklungsschritt;
Fig. 8 eine schematische Darstellung einer Montagesituation des Wandbauteils aus Fig. 7 in einem weiteren Entwicklungsschritt;
Fig. 9 eine schematische Darstellung einer Montagesituation des Wandbauteils aus Fig. 8 in einem weiteren Entwicklungsschritt;
Fig. 10 eine schematische Darstellung einer Montagesituation eines vertikalen Eckbauteils für eine Dachkonstruktion;
Fig. 11 eine schematische Darstellung einer Montagesituation des vertikalen Eckbauteils aus Fig. 10 in einem weiteren Entwicklungsschritt;
Fig. 12 eine schematische Darstellung einer Montagesituation des vertikalen Eckbauteils aus Fig. 11 in einem weiteren Entwicklungsschritt;
Fig. 13 eine schematische Darstellung einer Montagesituation des vertikalen Eckbauteils aus Fig. 12 in einem weiteren Entwicklungsschritt;
Fig. 14 schematische Einzelansicht des vertikalen Eckbauteils aus Fig. 10;
Fig. 15 schematische Darstellung des vertikalen Eckbauteils aus Fig. 14 in dem Entwicklungsschritt aus Fig. 13;
Fig. 16 schematische Darstellung einer Sockelkonstruktion zur Errichtung eines Bauwerks gemäß vorliegender Erfindung;
Fig. 17 schematische Darstellung einer Bodenstruktur mit einer Mehrzahl von Sockelelementen;
Fig. 18 eine schematische Darstellung der Bodenstruktur aus Fig. 17 mit einer ersten horizontalen Lage aus Wabenelementen, an der die H-Bauteile aus Fig. 1 bis 9 beteiligt sind;
Fig. 19 eine schematische Darstellung der Situation aus Fig. 18, ergänzt um eine Mehrzahl von V-Bauteilen, die entsprechend der Figuren 1 bis 7 mit H-Bauteilen verbunden sind;
Fig. 20 eine schematische Darstellung ausgehend von der Situation in Fig. 19 mit einer zweiten horizontalen Lage aus H-Bauteilen;
Fig. 21 eine schematische Darstellung der Situation aus Fig. 20, ergänzt um eine weitere Lage von V-Bauteilen;
Fig. 22 eine schematische Darstellung der Situation aus Fig. 21, ergänzt um eine weitere horizontale Lage;
Fig. 23 eine schematische Darstellung der Situation aus Fig. 22, ergänzt um eine Dachstruktur;
Fig. 24 eine schematische Darstellung der Situation aus Fig. 23, ergänzt um äußere Wandbauteile;
Fig. 25 eine schematische Darstellung der Situation aus Fig. 24, ergänzt um einen Türrahmen;
Fig. 26 eine schematische Darstellung der Situation aus Fig. 25, ergänzt um eine Stützanordnung;
Fig. 27 eine schematische Darstellung der Situation aus Fig. 26 mit einer ersten Fassadenreihe an der Stützanordnung;
Fig. 28 eine schematische Darstellung der Situation aus Fig. 27, ergänzt um eine zweite Stützanordnung;
Fig. 29 eine schematische Darstellung der Situation aus Fig. 28, ergänzt um eine zweite Fassadenreihe an der zweiten Stützanordnung;
Fig. 30 eine schematische Darstellung der Situation aus Fig. 29, ergänzt um eine dritte Stützanordnung;
Fig. 31 eine schematische Darstellung der Situation aus Fig. 30, ergänzt um eine dritte Fassadenreihe an der dritten Stützanordnung;
Fig. 32 eine schematische Darstellung der Situation aus Fig. 31, ergänzt um eine vierte Stützanordnung;
Fig. 33 eine schematische Darstellung der Situation aus Fig. 32, ergänzt um eine vierte Fassadenreihe an der vierten Stützanordnung.

Mit der vorliegenden Erfindung wird ein Bausatz 1 bereitgestellt, der aus einer Mehrzahl von Bauteilen gebildet wird, aus denen ein Bauwerk im Wesentlichen ausschließlich durch eine wechselweise Herstellung von Steckverbindungen errichtet werden kann. Mit "Bauwerk" sind im Grunde beliebige Bauwerke gemeint, vorzugsweise aber Bauwerke, die bewohnbar sind. Die mit der vorliegenden Erfindung beschriebene Ausführungsform eines "Bausatzes" und der entsprechenden Mehrzahl von Bauteilen wird im Zusammenhang mit der Errichtung eines bewohnbaren Bauwerks beschrieben. Die vorliegende Erfindung ist allerdings nicht auf Bausätze beschränkt, die ausschließlich zur Herstellung bewohnbarer Bauwerke geeignet sind.

Für die vorliegende Erfindung sind Materialien oder Werkstoffe nicht von erfindungswesentlicher Bedeutung. Vorzugsweise soll der erfindungsgemäße Bausatz 1 ausschließlich Bauteile aus nachwachsenden Rohstoffen umfassen. So können die Bauteile des Bausatzes aus Holz oder aus gepressten Gräsern, wie Stroh, Miscanthus oder dergleichen hergestellt sein. Die Herstellung solcher Bauteile aus Holz oder anderen nachwachsenden Rohstoffen ist bekannt und nicht Gegenstand der vorliegenden Erfindung. Die vorliegende Erfindung kann aber auch mit Bausätzen umgesetzt werden, in denen neben Bauteilen aus Holz oder anderen nachwachsenden Rohstoffen auch Bauteile aus anderen Materialien, wie Metall, Glas oder Kunststoff Verwendung finden. Die vorliegende Erfindung umfasst auch Bausätze, die ausschließlich aus Bauteilen bestehen, die nicht aus Holz oder nachwachsenden Rohstoffen hergestellt sind.

Der Bausatz 1 umfasst eine Mehrzahl und in ihrer Funktion und Beschaffenheit unterschiedlicher Bauteile.

Eine erste Gruppe A umfasst V-Bauteile 100. Die Bezeichnung "V-Bauteil" dient als Hinweis, dass diese Bauteile in einem fertiggestellten Bauwerk im Wesentlichen vertikal ausgerichtet sind. Während einer Errichtung eines Bauwerks können diese V-Bauteile 100 vorübergehend auch anders als vertikal ausgerichtet sein. Die Ausrichtung bezieht sich zudem auf die Ausrichtung mit Bezug auf einen Boden des Bauwerks und nicht auf einen Untergrund, auf dem der Boden ausgerichtet wird.

Der Bausatz 1 umfasst auch eine zweite Gruppe B von H-Bauteilen 200. Mit der Bezeichnung "H-Bauteil" wird ausgedrückt, dass sich die Bauteile der Gruppe B in einem fertigen Bauwerk in einer im Wesentlichen horizontalen Ausrichtung befinden. Auch diese H-Bauteile 200 können während der Errichtung eines Bauwerks vorübergehend anders als horizontal ausgerichtet sein. Auch diese Ausrichtung bezieht sich auf einen Boden eines fertiggestellten Bauwerks und nicht auf einen Untergrund, auf dem der Boden ausgerichtet ist.

Der erfindungsgemäße Bausatz 1 umfasst auch eine dritte Gruppe C mit Wandelementen 300. Diese Wandelemente 300 werden zur Flächenverkleidung verwendet.

Der erfindungsgemäße Bausatz 1 umfasst zudem eine vierte Gruppe D von vertikalen Eckverbindern 400. Diese vertikalen Eckverbinder 400 dienen dazu, einen vertikalen Übergang zu einer horizontalen oder schrägen Dachkon) struktion herzustellen. Eine solche schräge Dachkonstruktion kann eine beliebige Dachneigung in unterschiedliche Richtungen bilden.

Der erfindungsgemäße Bausatz 1 umfasst auch eine Mehrzahl fünfte Gruppe E von Sockelelementen 500. Diese Sockelelemente 500 stützen das zu errichtende Bauwerk auf einem Untergrund ab.

Der erfindungsgemäße Bausatz 1 umfasst auch eine sechste Gruppe F von Wabenelementen 600, die eine Bodenstruktur bilden.

Der erfindungsgemäße Bausatz 1 umfasst auch eine siebte Gruppe G von Stützelementen 700, an der eine Außenfassade angehängt werden kann.

Der erfindungsgemäße Bausatz 1 umfasst auch eine achte Gruppe H von Fassadenelementen 800. Die Fassadenelemente 800 werden an die Stützelemente 700 angehängt, um die Außenfassade zu bilden.

Der erfindungsgemäße Bausatz 1 umfasst auch eine neunte Gruppe I von diverse weiteren Bauteile 900.

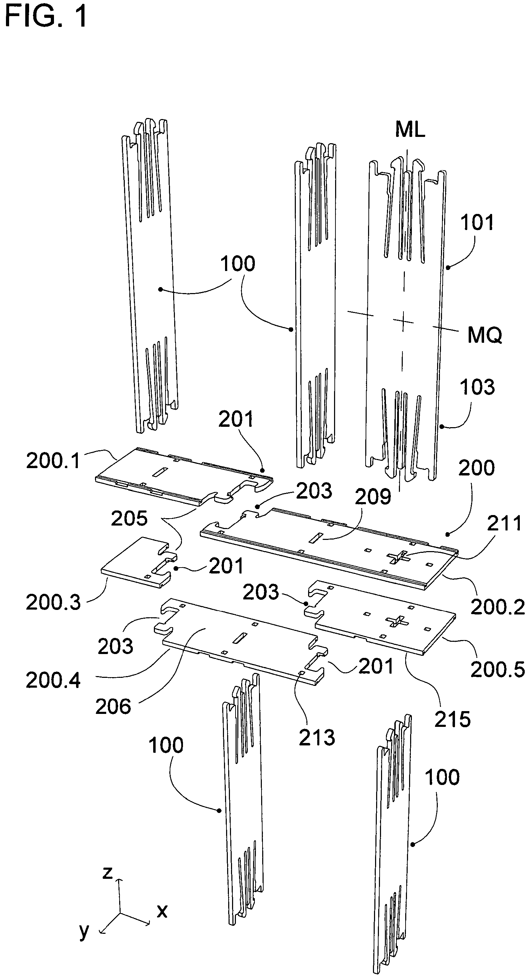

In Fig. 1 sind schematisch fünf V-Bauteile 100 sowie fünf H-Bauteile 200 in einer Explosionsdarstellung zu sehen. Im Folgenden wird beispielhaft eines der V-Bauteile 100 näher beschrieben. Die V-Bauteile 100 in Fig. 1 sind alle baugleich, so dass mit der Beschreibung eines V-Bauteils 100 alle V-Bauteile 100 in Fig. 1 beschrieben sind.

Das V-Bauteil 100 ist in Bezug zu einer Mittellängsachse ML und in Bezug zu einer Mittelquerachse MQ spiegelsymmetrisch ausgebildet. Das V-Bauteil 100 weist eine erste Steckseite 101 und eine zweite Steckseite 103 auf. Aufgrund der doppelt spiegelsymmetrischen Ausbildung sind die beiden durch die Mittellängsachse ML gebildeten Längshälften sowie die beiden durch die Mittelquerachse MQ gebildeten Querhälften, insbesondere die erste Steckseite 101 und die zweite Steckseite 103 einander entsprechend ausgebildet. Die erste Steckseite 101 weist in einer ihrer Querhälften einen ersten tiefen Einschnitt 105 auf, der sich jeweils nahe der Mittellängsachse ML und parallel zu dieser erstreckt. Die erste Steckseite 101 weist zudem einen zweiten tiefen Einschnitt 107 auf. Der erste und zweite Einschnitt 105, 107 haben in der dargestellten Ausführungsform eine gleiche Tiefe, können in anderen Ausführungsformen aber eine unterschiedliche Tiefe haben. Die Tiefe des ersten Einschnitts 105 und des zweiten Einschnitts 107 beträgt ein Vielfaches einer Schnittbreite. Der zweite Einschnitt 107 ist weiter entfernt zur Mittellängsachse ML ausgebildet als der erste Einschnitt 105 und verläuft nicht parallel zu der Mittellängsachse ML und dem ersten Einschnitt 105, sondern divergiert von der ersten Steckseite 101 ausgehend, so dass der erste Einschnitt 105 mit dem zweiten Einschnitt 107 außerhalb des V-Bauteils 100 einen spitzen Winkel einschließen. Der erste Einschnitt 105 und der zweite Einschnitt 107 laufen also in Form eines umgekehrt V auseinander.

Der erste Einschnitt 105 und der zweite Einschnitt 107 begrenzen ein erstes Riegelelement 109. Ein an der ersten Steckseite 101 ausgebildetes freies Ende des ersten Riegelelements 109 bildet einen Riegelkopf 111. Der Riegelkopf 111 ist mit einer nach außen, von der Mittellängsachse ML weg gerichteten Hakenstruktur ausgebildet und weist eine spitz zulaufende Stirnseite 113 mit abgerundeten Kantenflächen auf. Das Riegelelement 109 umfasst auch einen Riegelstamm 115, der sich vom Riegelkopf 111 bis zu einer Riegelwurzel 117 erstreckt. Aufgrund der divergierenden ersten und zweiten Einschnitte 105 und 107 hat der Riegelstamm 115 an der Riegelwurzel 117 eine größere Breite als direkt unterhalb des Riegelkopfes 111.

Aufgrund des ersten und zweiten Einschnitte 105 und 107 ist das Riegelelement 109 in der in Fig. 1 dargestellten Schließstellung, also von der Mittellängsachse ML weg, vorgespannt. Durch die Spiegelsymmetrie zur Mittellängsachse ML sind an der ersten und zweiten Steckseite 101 und 103 jeweils zwei Riegelelemente 109 spiegelverkehrt zueinander ausgebildet. Die beiden Riegelelemente 109 der ersten oder zweiten Steckseite 101 bzw. 103 lassen sich durch einen durch die Schnittbreite des ersten Einschnitts 105 gewährten Bewegungsraum gegen die Vorspannung zueinander hinbewegen.

Ein solcher elastischer Klickverschluss ist aus dem Stand der Technik zum Beispiel bei Tragegurten von Rucksäcken oder bei Gürteln aus Kunststoff bekannt.

) In Fig. 1 ist gezeigt, dass die H-Bauteile 200 der zweiten Gruppe B in fünf H-Varianten 200.1, 200.2, 200.3, 200.4 und 200.5 ausgebildet sind. Die H-Bauelemente 200 sind übereinander und nebeneinander angeordnet. Die H-Variante 200.1 weist eine erste H-Steckseite 201 auf, die komplementär zu einer zweiten H-Steckseite 203 der zweiten H-Variante 200.2 ausgebildet ist. Die erste H-Steckseite 201 und die zweite H-Steckseite 203 weisen jeweils eine H-Verhakungskontur 205 auf, die ein Zusammenfügen und Lösen der beiden H-Varianten 200.1, 200.2 in Querrichtung erlaubt und eine Lösung oder Trennung im zusammengefügten Zustand bei Beanspruchung in Längsrichtung unterbindet.

In einer H-Oberfläche 206 der H-Variante 200.1 ist ein Riegelschlitz 209 ausgebildet. Der Riegelschlitz 209 hat eine Schlitzlänge, die kürzer ist als eine größte Breite des Riegelkopfes 111. Die Länge des Riegelschlitzes 209 ist aber größer als ein um die jeweilige Breite des ersten Einschnitts 105 reduzierte Breite des Riegelkopfes 111. Die durch die Breite des ersten Einschnitts 105 bereitgestellten Bewegungsräume ermöglichen also die Einführung des Riegelkopfes 111 in den jeweiligen Riegelschlitz 209, indem die beiden einander spiegelsymmetrisch zugeordneten Riegelköpfe 111 gegen deren Vorspannung in Richtung Mittellängsachse ML zusammengedrückt werden. Das Zusammendrücken erfolgt durch eine Schubbewegung des Riegelkopfes 111 in einer Richtung senkrecht zum Riegelschlitz 209 aufgrund der spitz zulaufenden Stirnkante konturbedingt selbsttätig. Alle Riegelschlitze 209 in sämtlichen H-Bauteilen 200 weisen im Folgenden die vorgenannte Schlitzlänge auf. Die H-Variante 200.1 weist neben dem Riegelschlitz 209 auch einen kreuzförmigen Doppel-Riegelschlitz 211 auf. Der kreuzförmige Doppel-Riegelschlitz 211 wird aus zwei sich kreuzenden Riegelschlitzen 209 gebildet. An dieser Stelle kann die Ausrichtung des V-Bauteils 100 wahlfrei um 90° verdreht erfolgen, um eine Steckverbindung herzustellen.

Zur Stabilisierung einer Steckverbindung zwischen einem V-Bauteil 100 und einem H-Bauteil 200 weist das V-Bauteil 100 an der ersten Steckseite 103 und der zweiten Steckseite 105 und in Verlängerung seiner jeweiligen V-Längskanten 121 einen stiftförmigen Ansatz 123 auf. Entsprechend ist in passendem Abstand von den jeweiligen Riegelschlitzen 209 eine H-Bohrung 213 ausgebildet, in welche jeweils ein stiftförmiger Ansatz 123 eingreifen kann, wenn die Riegelköpfe 111 durch den jeweiligen Riegelschlitz 209 hindurchgreifen. Dadurch wird führt jede hergestellte Steckverbindung zu einem Kraft- und Formschluss in wenigstens drei Richtungen.

Die erste H-Variante 200.1 und die zweite H-Variante 200.2 weisen an ihren H-Längskanten 215 jeweils eine H-Längsnut 207 auf. Die jeweilige H-Längsnut 207 ist beim Zusammenbau von V-Bauteil 100 und H-Variante 200.1 bzw. 200.2 dem V-Bauteil 100 zugewandt. Dadurch wird die Voraussetzung geschaffen, dass die Wandelemente 300 mit ihren Riegelzapfen 301 durch die H-Aussparungen 217 in die jeweilige H-Längsnut 207 eingesetzt und darin verschoben werden kann, so dass eine Verriegelung eintritt.

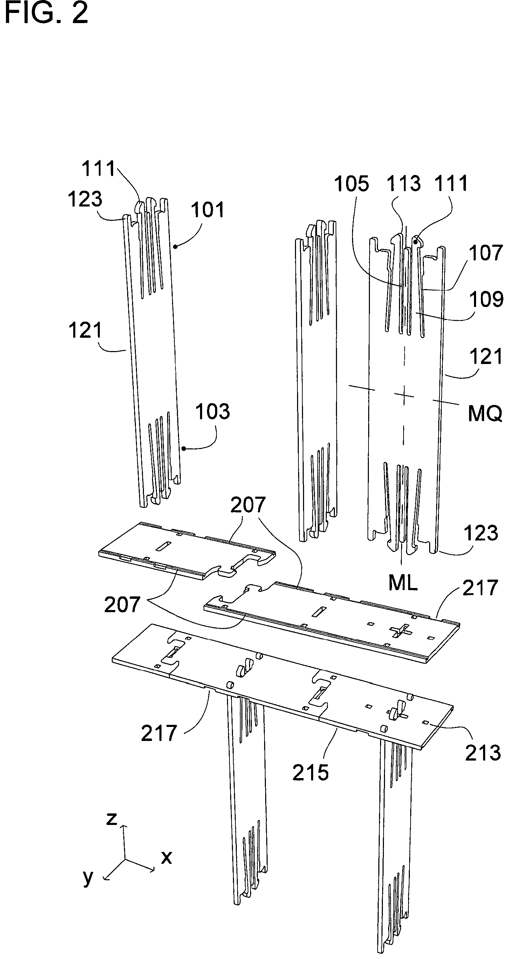

Auch die dritte, vierte und fünfte H-Variante 200.3, 200.4, 200.5 weisen jeweils die erste H-Steckseite 201 und/oder die zweite H-Steckseite 203 auf. Auch diese weisen eine H-Verhakungskontur 205 auf, die mit einer H-Verhakungskontur 205 der ersten und/oder zweiten H-Steckseite 201 bzw. 203 einer jeweils anderen H-Variante 200.3, 200.4, 200.5 komplementär ist. Auch diese H-Verhakungskontur 205en ermöglichen, dass die dritten, vierten und fünften H-Varianten 200.3, 200.4, 200.5 in Querrichtung miteinander verhakend zusammengefügt und gelöst werden können, in Längsrichtung aber ortsfest verbunden sind. Die H-Verhakungskontur 205 sämtlicher H-Bauteile 200 sind so ausgebildet, dass diese nach einem Zusammenfügen in einem Abschnitt der jeweiligen H-Verhakungskontur 205 einen Riegelschlitz 209 bilden. Dies ist in Fig. 2 zu sehen. Die erste und zweite H-Variante 200.1, 200.2 bilden im zusammengehakten Zustand eine horizontale Lage/Ebene und liegen über einer durch die dritte, vierte und fünfte H-Variante 200.3, 200.4, 200.5 gebildeten horizontalen Lage/Ebene.

Es werden also zwei übereinander liegende Lagen von H-Bauteilen 200 gebildet, wobei die wenigstens zwei horizontal nebeneinander angeordneten plattenförmigen H-Bauteile 200 eine unterschiedliche Länge haben und eine Fuge zwischen den wenigstens zwei horizontal nebeneinander angeordneten plattenförmigen H-Bauteilen 200 versetzt zu einer Fuge zwischen zwei über den wenigstens zwei horizontal nebeneinander angeordneten plattenförmigen H-Bauteilen 200 angeordneten H-Bauteilen 200 liegt.

Die Steckseiten 103, 105 des V-Bauteils 100 sind so aus) gebildet, dass die Riegelköpfe 111 durch zwei in den H-Bauteilen 200 fluchtend übereinander angeordnete Riegelschlitze 209 der zweilagig angeordneten H-Bauteile 200 hindurchgreifen können. Auch die dritte, vierte und fünfte H-Variante 200.3, 200.4, 200.5 weisen an ihren Unterseiten (nicht dargestellt), die den darunterliegenden V-Bauteilen 100 zugewandt sind, die H-Längsnuten 207 in der Nähe der H-Längskanten 215 auf.

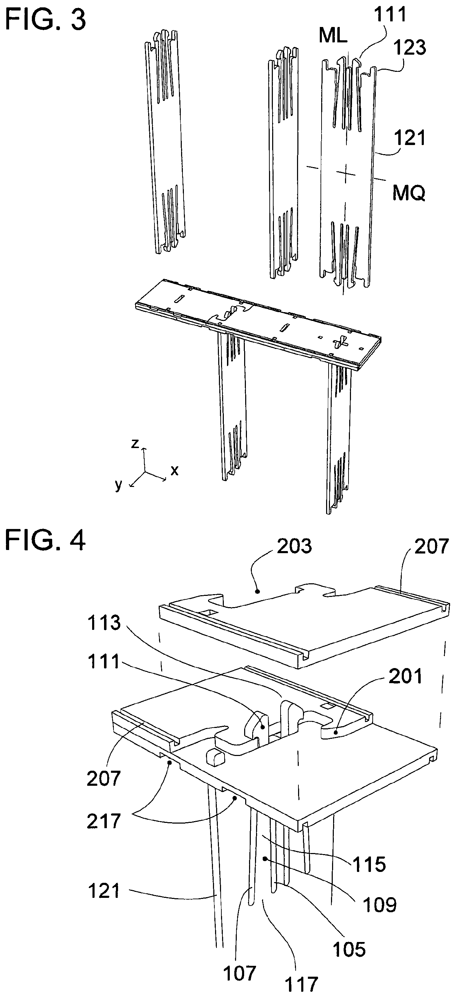

In Fig. 2 sind die unteren V-Bauteile 100 und die dritte, vierte und fünfte H-Variante 200.3, 200.4, 200.5 der H-Bauteile 200 wie oben beschrieben seitlich (quer) zusammengefügt (verhakt in Längsrichtung). In Fig. 3 folgt die Zusammenfügung der ersten und zweiten H-Varinate 200.1, 200.2 der H-Bauteile 200, ebenfalls wie oben beschrieben in seitlicher Zusammenfügung und Verhakung in Längsrichtung sowie die Anordnung dieser ersten und zweiten H-Variante 200.1, 200.2 über der dritten, vierten und fünften H-Variante 200.2, 200.4, 200.5. In Fig. 3 ist auch gezeigt, wie die Riegelköpfe 111 eines V-Bauteil 100 durch die zwei fluchtend übereinanderliegenden Riegelschlitze 209 in den H-Oberflächen 207 der H-Bauteile 200 hindurchgreifen.

Diese Funktion ist in Fig. 4 im Detail dargestellt. In Fig. 4 ist auch gut zu erkennen, wie die stiftförmigen Ansätze 123 in die jeweiligen H-Bohrungen 213 der H-Bauteile 200 eingreifen.

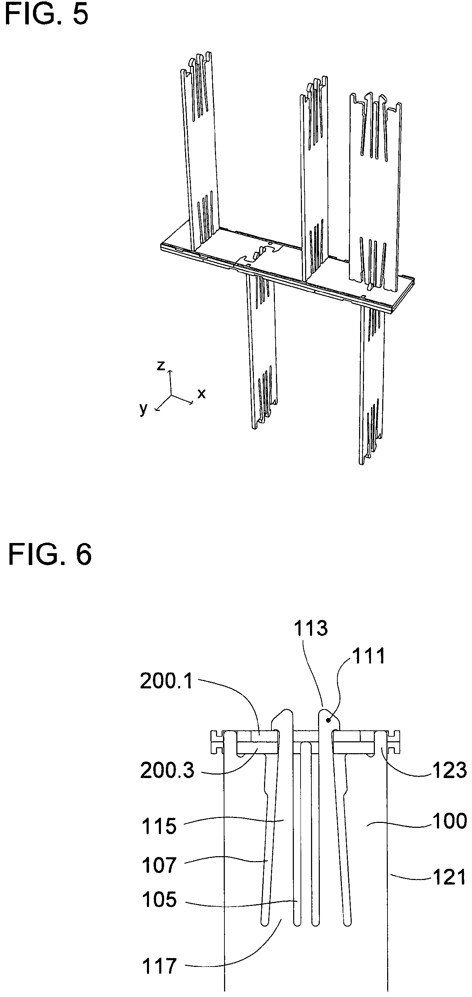

In Fig. 5 wird ein nachfolgender Entwicklungsschritt dargestellt. Die oberhalb der beiden horizontalen Lagen aus H-Bauteilen 200 angeordneten V-Bauteile 100 sind mit ihren Riegelköpfen 111 in jeweilige Riegelschlitze 209 eingesteckt und greifen mit ihren stiftförmigen Ansätzen 123 in die entsprechenden H-Bohrungen 213.

In Fig. 6 ist dieser Entwicklungsschritt im Schnitt und im Detail dargestellt. Die jeweiligen Riegelköpfe 111 in den Riegelschlitzen 209 verhindern eine Bewegung des V-Bauteils 100 in Z-Richtung und die jeweiligen stiftförmigen Ansätze 123 in den H-Bohrungen 213 verhindern eine Bewegung in X- und Y-Richtung.

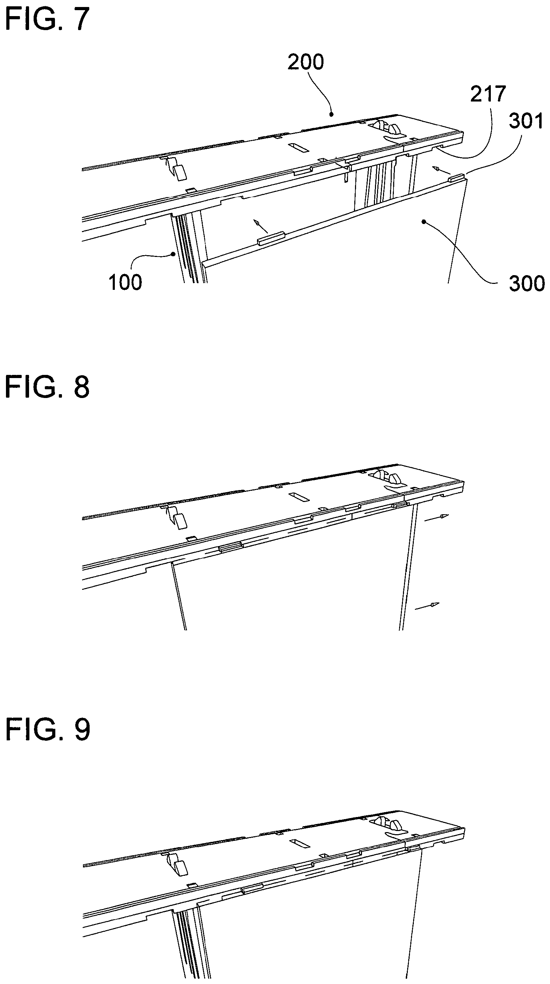

In Fig. 4 ist auch die H-Längsnut 207 an der jeweiligen H-Längskante 215 eines H-Bauteils 200 gut zu sehen. Jedes H-Bauteil 200 weist an seiner H-Längskante 215 in Abständen H-Aussparungen 217 auf, die eine Verbindung zu der jeweiligen H-Längsnut 207 herstellen. Der Zweck dieser H-Aussparungen 217 ist in Fig. 7 bis 9 zu erkennen und wird mit Bezug auf diese beschrieben.

Die dritte Gruppe D umfasst die Wandelemente 300, die an ihrem Umfang Riegelzapfen 301 aufweisen. Die Riegelzapfen 301 passen durch die H-Aussparungen 217 an der H-Längskante 215 und sind vorzugsweise in ihren Abmessungen an die Abmessungen der H-Aussparungen 217 passgenau angepasst. Für die Montage eines Wandelements 300 wird dieses mit den Riegelzapfen 301 durch die H-Aussparungen 217 in die H-Längsnut 207 eingesetzt. Ein Verschieben des Wandelements 300 in der H-Längsnut 207 in einer in Fig. 8 dargestellten Pfeilrichtung, bis dieses mit dem V-Bauteil 100 ausgerichtet ist, führt zu einer Verriegelung des Wandelements 300 an dem jeweiligen H-Bauteil 200.

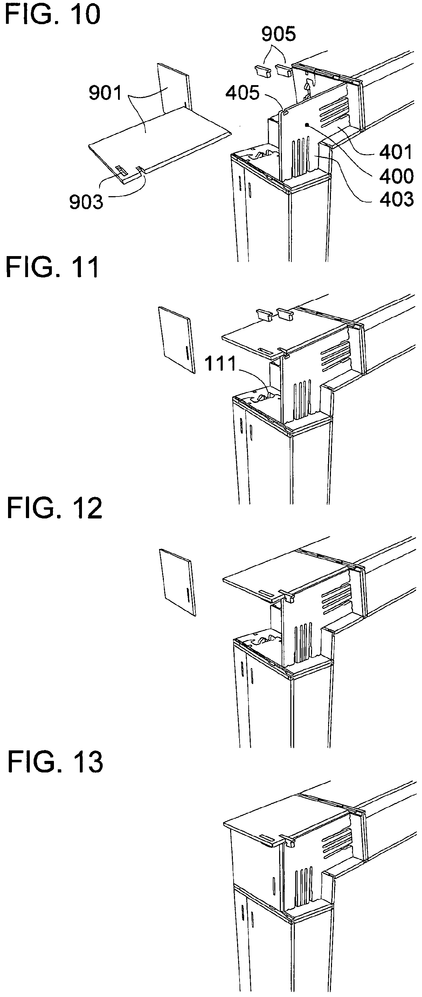

In Fig. 10 ist schematisch eine Eckensituation als Übergang zu einem Dachbereich schematisch dargestellt. In einem Wandelement 300 ist die erste Steckseite 103 eines obersten V-Bauteils 100 zu sehen. Dieses könnte zum Beispiel dem linken oberersten V-Bauteil 100 in Fig. 5 entsprechen. Die Steckseite 103 ist in Fig. 5 noch zu sehen. Diese greift durch die H-Variante 200.1 durch und dient einem Eckbauteil 400 als Steckpartner.

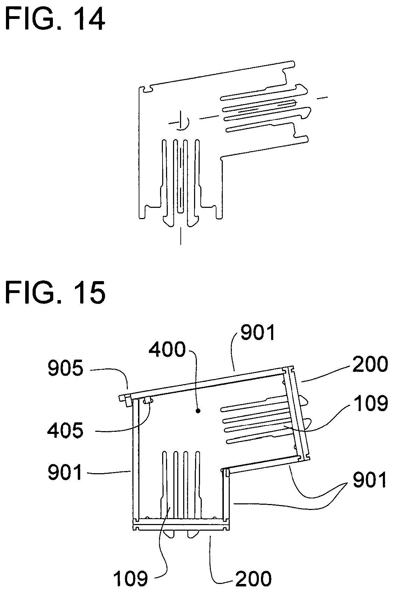

Zur Herstellung einer Eckverbindung wird das in Fig. 14 gezeigte Eckbauteil 400 verwendet. Das Eckbauteil 400 weist ebenfalls eine erste E-Steckseite 401 und eine zweite E-Steckseite 403 auf, die allerdings in einem stumpfen Winkel zueinander ausgerichtet sind. Die E-Steckseite 401 dient der ersten Steckseite 103 als Steckpartner. Der stumpfe Winkel ist in der vorliegenden Ausführungsform nur ein wenig größer als 90°. In anderen Ausführungsformen kann der stumpfe Winkel auch deutlich ) größer als 90° sein. Der Aufbau der ersten und zweiten E-Steckseite 401 bzw. 403 ist identisch mit dem Aufbau der Steckseiten 101 bzw. 103 aus Fig. 1.

Für die Herstellung einer Eckverbindung in Fig. 10 werden vorzugsweise zwei Eckbauteile 400 parallel zueinander in entsprechende V-Bauteile 100 gesteckt. Im Anschluss daran werden die V-Bauteile 100, in denen das jeweilige Eckbauteil 400 eingesteckt ist, verkleidet. Die Verkleidung erfolgt mit speziellen, für die Ecken vorgesehenen Verkleidungselementen 901. Damit diese an der Ecke fest angebracht werden können und sich nicht selbsttätig lösen, weisen die Verkleidungselemente 901 und die Eckbauteile 400 jeweils eine H-Aussparung 903 und eine E-Ausnehmung 405 auf. In diese E-Ausnehmungen 405 und H-Aussparungen 903 werden für diesen Zweck eingepasste Schlüsselstücke 905 eingesetzt. Die Schlüsselstücke 905 verhindern die selbsttätige Lösung der Eckverkleidung. Dies ist in den Fig. 11 bis 13 zu sehen.

In Fig. 15 ist von der Seite dargestellt, wie die Montage der Wandverkleidung und der Schlüsselstücke 905 in Fig. 13 erfolgt.

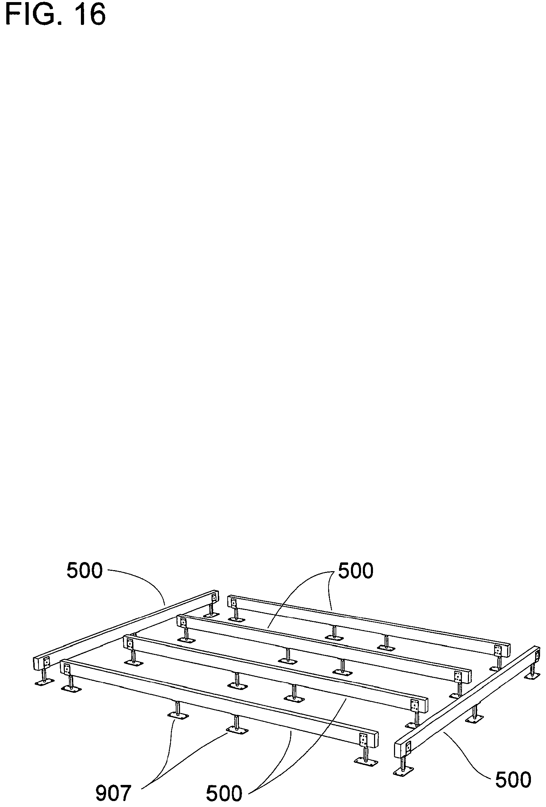

In den folgenden Fig. 16 bis 33 werden nacheinander Montageschritte für ein Bauwerk aus den vorgenannten Bauelementen dargestellt und beschrieben. Das dargestellte Bauwerk ist ein Ausführungsbeispiel für ein Bauwerk aus dem erfindungsgemäßen Bausatz 1.

In Fig. 16 ist eine Sockelkonstruktion mit Bauteilen der fünften Gruppe E dargestellt. Eine Mehrzahl von Sockelelementen 500 ist auf einem Untergrund aufgestellt und ausgerichtet. In der in Fig. 16 dargestellten Ausführungsform umfasst die Sockelkonstruktion vier Sockelelemente 500 in Längsrichtung mit jeweils vier Füßen 907 und zwei Sockelelemente 500 in Querrichtung mit jeweils drei Füßen 907. Die Sockelelemente 500 sind in der vorliegenden Ausführungsform Vierkanthölzer, an denen Füße 907 angeschraubt sind. In der dargestellten Ausführungsform sind die Füße 907 aus Metall. Auch die Füße 907 des zu errichtenden Bauwerks können aber aus nachwachsenden Rohstoffen hergestellt sein.

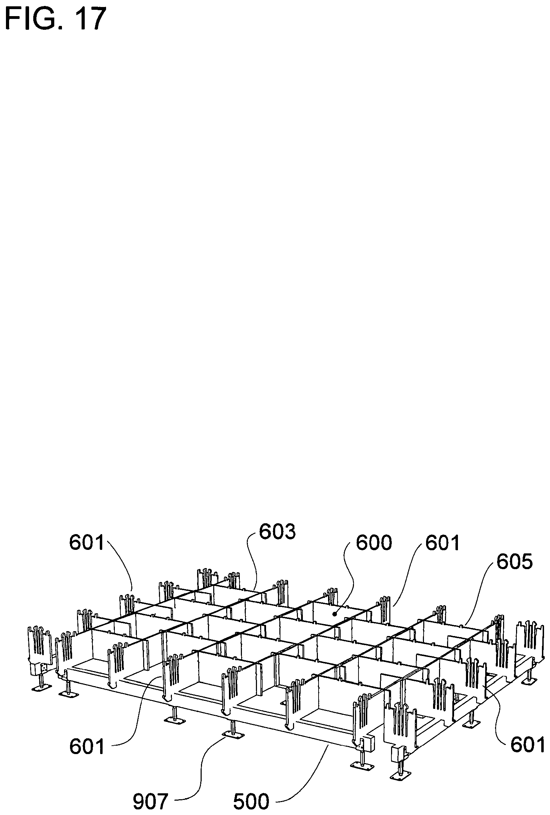

In Fig. 17 ist eine auf der Sockelkonstruktion in Fig. 16 aufgesetzte Bodenstruktur aus Bauelementen der sechsten Gruppe F dargestellt. Die Bodenstruktur ist wabenförmig ausgebildet. Auf die Umfang der Sockelkonstruktion bildenden Sockelelemente 500 aufgesetzte Wabenelemente 600 weisen an einer dem Untergrund abgewandten Seite, also nach oben, eine W-Steckseite 601 auf, die so konstruiert ist, wie dies in Fig. 1 für die erste Steckseite 103 beschrieben ist. Im horizontalen Zentrum der Sockelkonstruktion weisen die Wabenelemente 600 an im Wesentlichen geraden W-Seitenkanten 603 jeweils zwei in Abstand zueinander liegende W-Zapfen 605 auf.

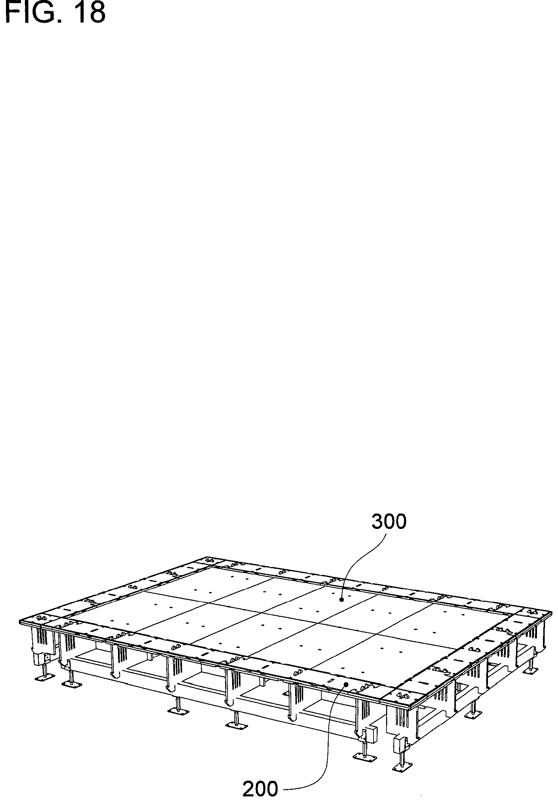

In Fig. 18 ist ein nächster Montageschritt bei der Errichtung eines Bauwerks dargestellt. Ausgehend von der Situation in Fig. 17 ist auf die außen liegenden W-Steckseiten 601 die in Fig. 1 bis Fig. 6 gezeigte und dazu beschriebene doppellagige Konstruktion aus H-Bauteilen 200 zusammengesteckt worden, so dass sich ein Rahmen um das Zentrum der Bodenstruktur bildet. Die Fläche zwischen dem aus H-Bauteilen 200 gebildeten Rahmen wird durch Wandelemente 300 abgedeckt, in denen E-Ausnehmungen 305 an den Stellen ausgebildet sind, an denen die Wabenelemente 600 W-Zapfen 605 tragen. Dadurch kann durch die Steckverbindung eine feste Bodensituation erzeugt werden.

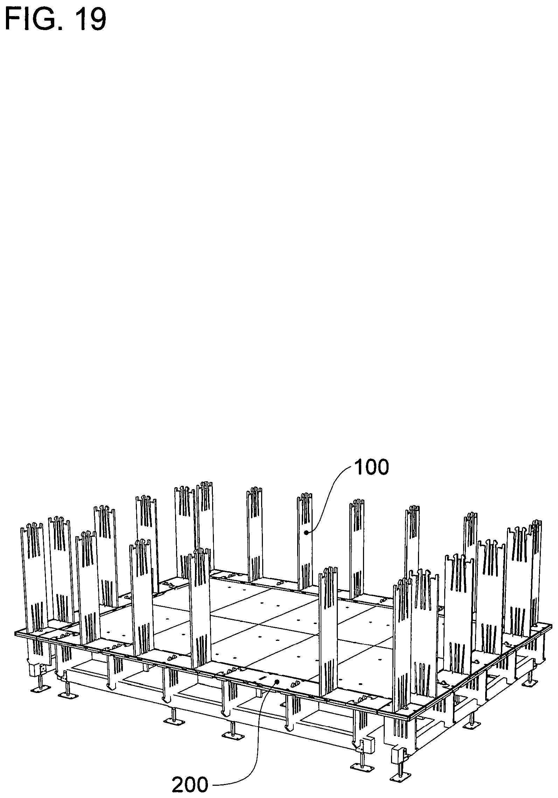

In Fig. 19 ist schematisch und ausgehend von Fig. 18 ein nächster Montageschritt bei der Errichtung des Bauwerks dargestellt. Auf die H-Bauteile 200 sind eine Mehrzahl (Reihe) von V-Bauteile gesteckt.

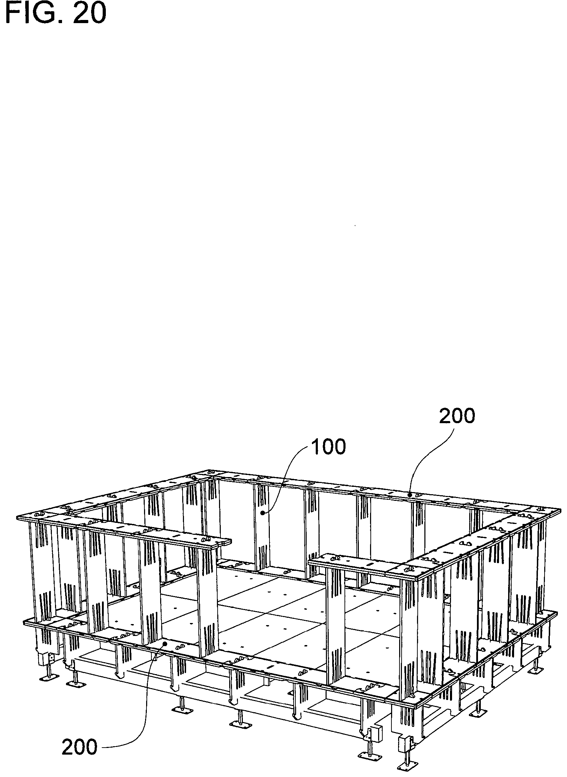

In Fig. 20 schließt sich an der Oberseite der in Fig. 19 aufgesteckten V-Bauteile 100 eine weitere Doppellage aus H-Bauteilen 200 an.

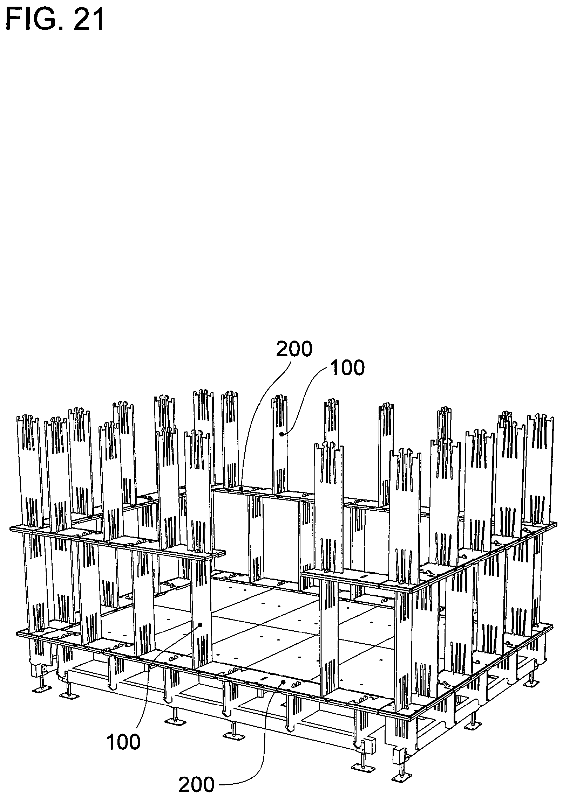

In Fig. 21 schließt sich ausgehend von Fig. 20 auf der weiteren Doppellage von H-Bauteilen 200 eine weitere Reihe von V-Bauteilen 100 an.

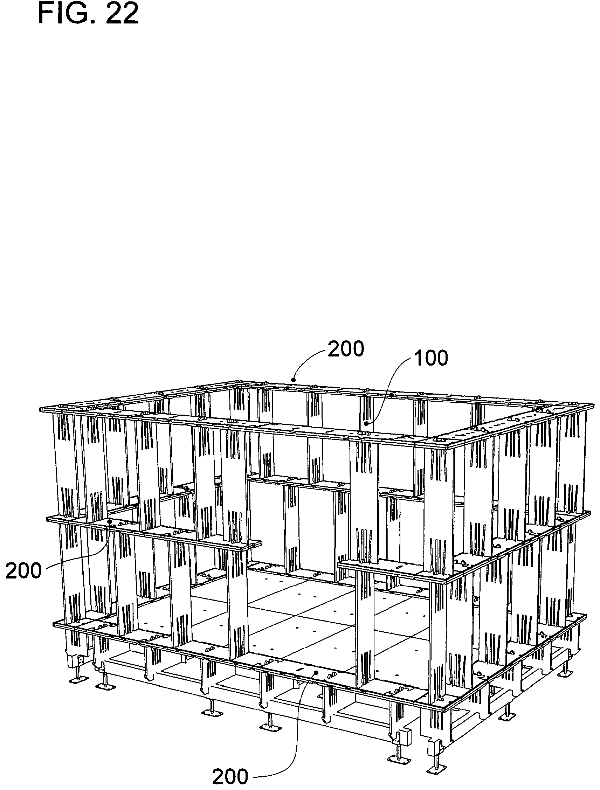

In Fig. 22 schließt sich der weiteren Reihe von V-Bauteilen 100 eine weitere Doppellage von H-Bauteilen 200 an.

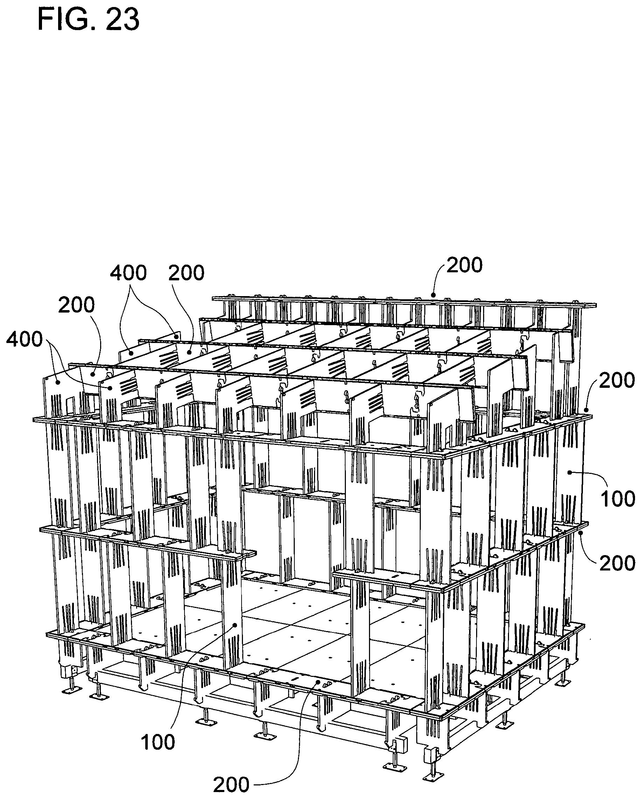

In Fig. 23 setzt sich ausgehend von Fig. 22 auf der dritten Doppellage von H-Bauteilen 200 eine Reihe von vertikalen Eckbauteilen 400 an, die in Fig. 10 bis 15 beschrieben sind. Die Eckbauteile 400 verbinden die H-Bauteile 200 mit zur Vertikalen geneigten Dachelementen, die in ihrer Konstruktion den H-Bauteilen 200 ähnlich sind. Eine Doppellage dieser Dachelemente wird durch die V-Bauteile 100 mit einer weiteren Lage von Dachelementen verbunden. Im Bereich der Dachkonstruktion sind die V-Bauteile 100 nicht vertikal ausgerichtet.

In Fig. 23 ist zu sehen, dass die Eckbauteile 400 für die vertikale Eckverbindung unterschiedliche vertikale Längen haben. Durch einen Anordnung der Eckbauteile 400 mit zunehmende Länge wird bei der Dachkonstruktion eine Dachschräge entwickelt. In Fig. 23 wird also die Grundlage für ein Pultdach geschaffen. Die letzten beiden vertikalen Bauelemente der Dachkonstruktion haben eine andere Gestaltung. Das letzte vertikale Bauteil weist zwei Steckseiten auf, wobei an der oben liegenden Steckseite wieder eine Doppellage aus H-Bauteilen 200 angebracht ist, die einen Abschluss bilden.

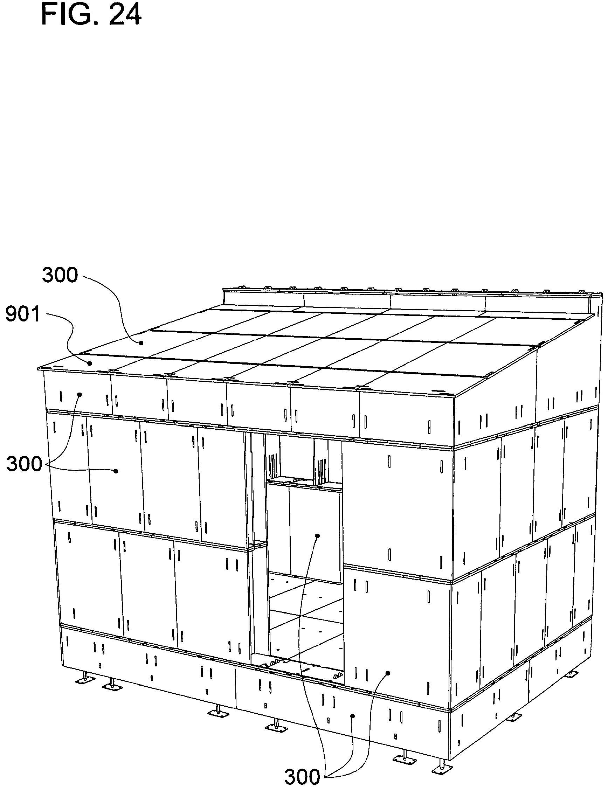

In Fig. 24 ist dargestellt, wie die Innen- und Außenwände und das Dach mit Wandelementen 300 verkleidet sind. Die Wandelemente 300 sind in Fig. 7 bis 9 beschrieben und die Vorgehensweise erfolgt so, wie in Verbindung mit Fig. 7 bis 9 beschrieben.

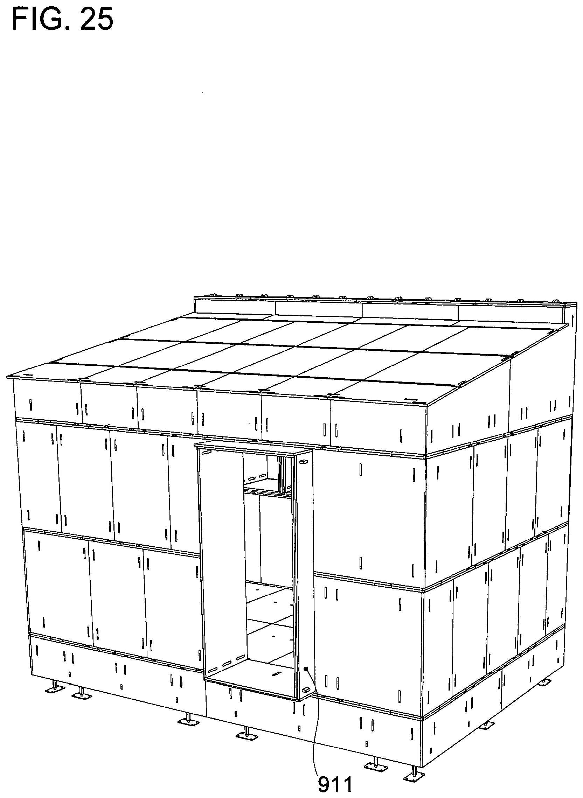

In Fig. 25 ist schematisch dargestellt, dass spezielle Bauelemente 909 einen Türrahmen 911 bilden.

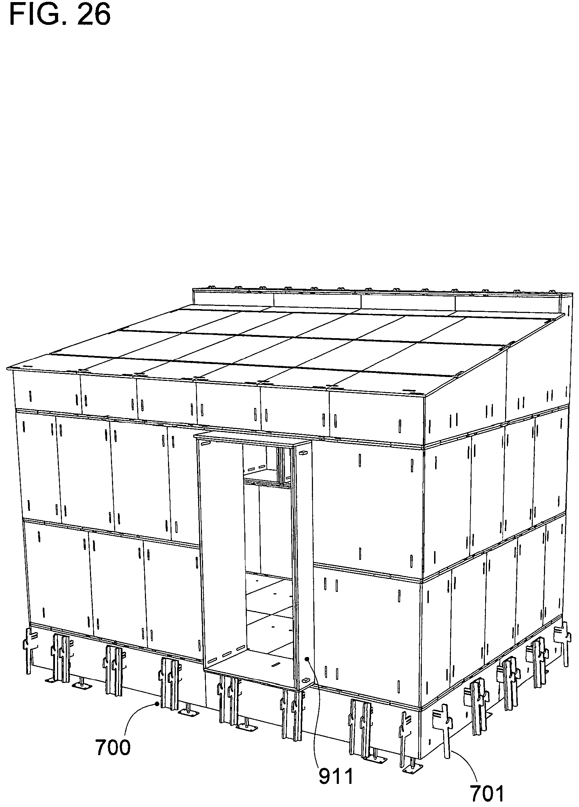

In Fig. 26 ist schematisch dargestellt, wie ausgehend von Fig. 25 im Sockel- und Bodenbereich an die Wandverkleidungen Stützelemente 700 der siebten Gruppe G angesteckt sind. Die Stützelemente 700 umfassen Hakenleisten 701, wobei einige Stützelemente 700 eine Hakenleiste 701 und andere Stützelemente 700 zwei Hakenleisten 701 aufweisen. Die Stützelemente 700 mit nur einer Hakenleiste 701 werden z.B. in den Eckbereichen eines Wandelements 300 einer Außenwand angesteckt. Die Stützelemente 700 mit zwei Hakenleisten 701 sind zwischen den Eckbereichen angeordnet.

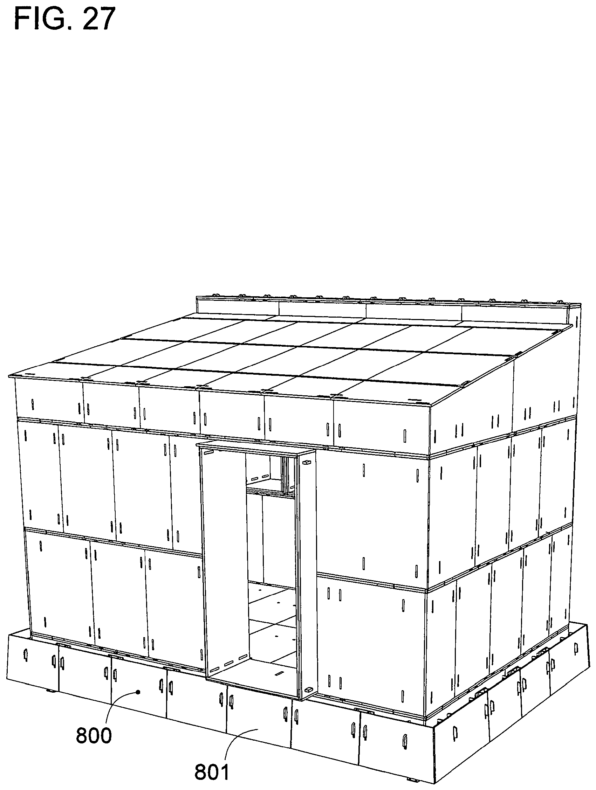

In Fig. 27 ist schematisch dargestellt, wie ausgehend von Fig. 26 an die Stützelemente 700 Fassadenelemente 800 der achten Gruppe H angehängt sind.

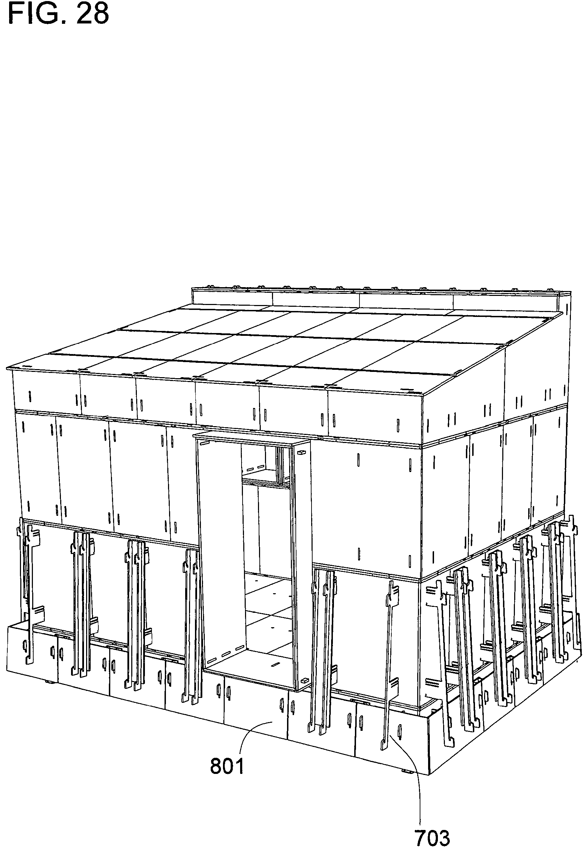

In Fig. 28 werden ausgehend von Fig. 27 zweite Stützelemente 703 an die nach oben angrenzenden Wandelemente 300 angesteckt. Diese zweiten Stützelemente 703 haben eine größere Länge und überlagern untere erste Fassadenelemente 801.

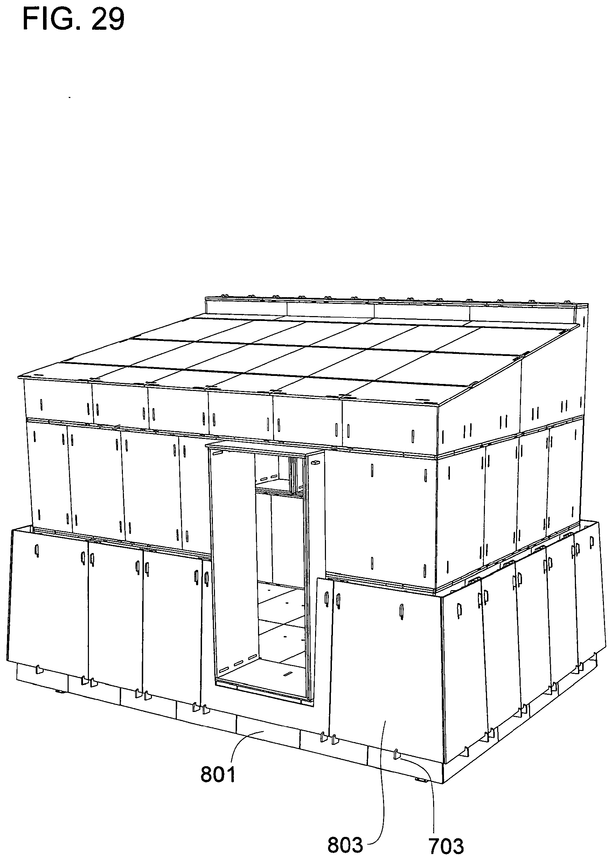

In Fig. 29 ist dargestellt, wie die zweiten Stützelemente 703 mit zweiten Fassadenelementen 803 abgehängt sind.

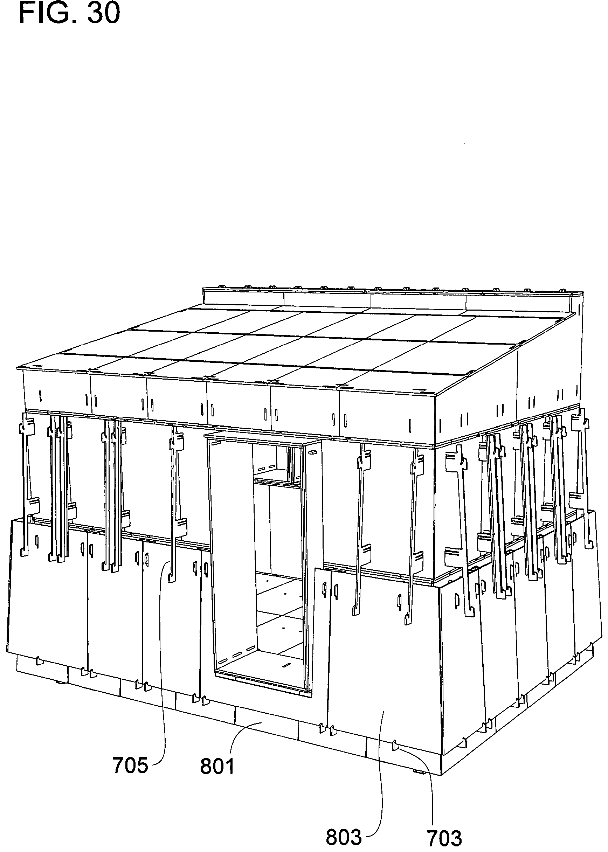

In Fig. 30 ist schematisch dargestellt, wie dritte Stützelemente 705 oberhalb der zweiten Fassadenelemente 803 in die Wandverkleidungen eingesteckt sind.

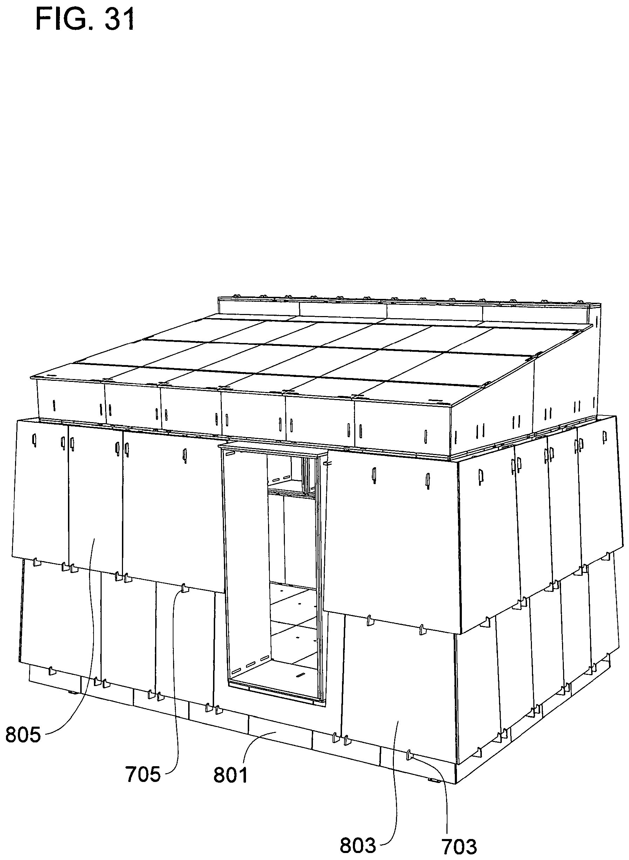

In Fig. 31 ist schematisch dargestellt, wie auch an die dritten Stützelemente 705 dritte Fassadenelemente 805 angehängt sind.

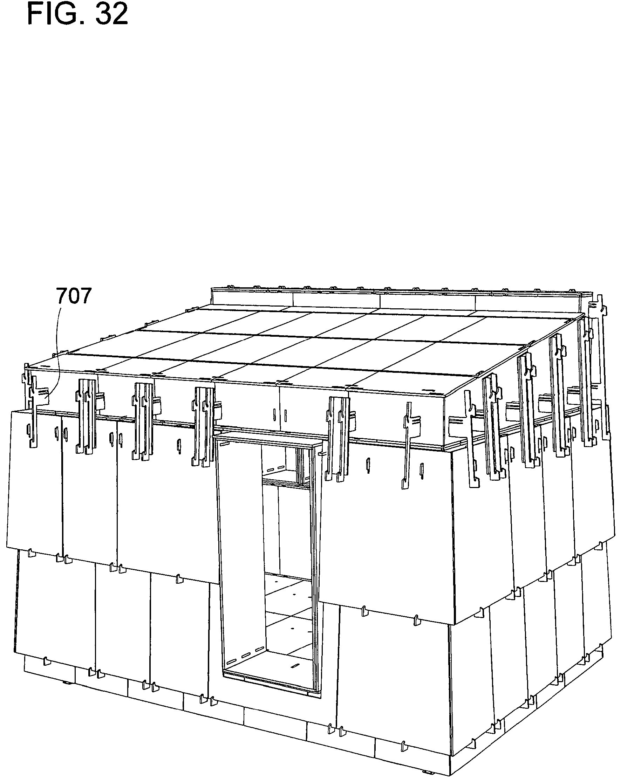

In Fig. 32 ist schematisch dargestellt, wie vierte Stützelemente 707 an die Wandverkleidung der Dachkonstruktion angesteckt sind.

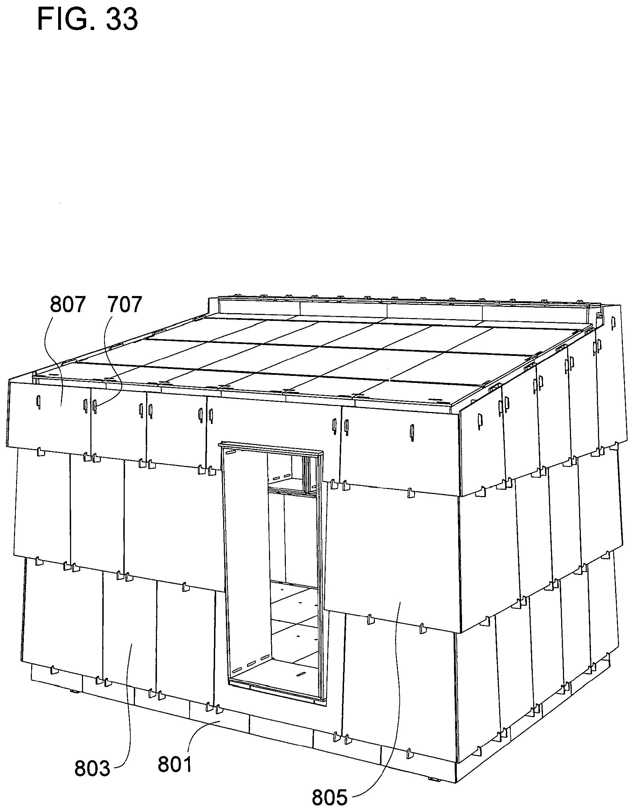

In Fig. 33 ist schematisch dargestellt, wie auch die vierten Stützelemente 707 mit vierten Fassadenelementen 807 abgehängt sind.

Damit ist das Bauwerk unter Verwendung der erfindungswesentlichen Bauteile des erfindungsgemäßen Bausatz fertiggestellt.

### Bezugszeichenliste

- 1: Bausatz
- 100: V-Bauteil
- 101: erste Steckseite
- 103: zweite Steckseite
- 105: erste Einschnitt
- 107: zweiter Einschnitt
- 109: Riegelelement
- 111: Riegelkopf
- 113: Stirnseite
- 115: Riegelstamm
- 117: Riegelwurzel
- 121: V-Längskante
- 121: stiftförmiger Ansatz
- 200: H-Bauteil
- 200.1: erste H-Variante
- 200.2: zweite H-Variante
- 200.3: dritte H-Variante
- 200.4: vierte H-Variante
- 200.5: fünfte H-Variante
- 201: erste H-Steckseite
- 203: zweite H-Steckseite
- 205: H-Verhakungskontur
- 206: H-Oberfläche
- 207: H-Längsnut
- 209: Riegelschlitz
- 211: Doppel-Riegelschlitz
- 213: H-Bohrung
- 215: H-Längskante
- 217: H-Aussparung
- 300: Wandelement
- 301: Riegelzapfen
- 400: Eckbauteil
- 401: erste E-Steckseite
- 403: zweite E-Steckseite
- 405: E-Ausnehmung
- 500: Sockelelement
- 600: Wabenelement
- 601: W-Steckseite
- 700: Stützelement
- 701: Hakenleiste
- 703: zweite Stützelement
- 705: drittes Stützelement
- 707: viertes Stützelement
- 800: Fassadenelement
- 801: erstes Fassadenelement
- 803: zweites Fassadenelement
- 805: drittes Fassadenelement
- 807: viertes Fassadenelement
- 900: weitere Bauteile
- 901: Verkleidungselemente
- 903: H-Aussparung
- 905: Schlüsselstück
- 907: Fuß
- 911: Türrahmen
- A: erste Gruppe
- B: zweite Gruppe
- C: dritte Gruppe
- D: vierte Gruppe
- E: fünfte Gruppe
- F: sechste Gruppe
- G: siebte Gruppe
- H: achte Gruppe
- I: neunte Gruppe
- ML: Mittellängsachse
- MQ: Mittelquerachse

## Patentansprüche

1. Bausatz für die Konstruktion eines Bauwerks, mit einer Mehrzahl von Bauteilen (100, 200, 300, 400, 500, 600, 700, 800, 900), die miteinander verbunden werden können, um ein statisch bestimmtes Bauwerk zu errichten, wobei wenigstens ein plattenförmiges V-Bauteil (100) und wenigsten zwei plattenförmige H-Bauteile (200) der Mehrzahl von Bauteilen (100, 200, 300, 400, 500, 600, 700, 800, 900) mittels Steckverbindung untereinander verbunden werden können, wobei
jedes V-Bauteil (100) wenigstens eine Steckseite (101; 103) aufweist, an der wenigstens ein in Richtung einer Schließstellung vorspannbares Riegelelement (109) mit einem Riegelkopf (111) ausgebildet ist, wobei in den wenigstens zwei plattenförmigen H-Bauteilen (200) jeweils ein erster und ein zweiter Riegelschlitz (209) ausgebildet ist, durch den jeweils eines der in Richtung einer Schließstellung vorspannbaren Riegelelemente (109) wenigstens eines der V-Bauteile (100) hindurchgreifen kann,
**dadurch gekennzeichnet,**
**dass** die Steckseiten (103, 105) des V-Bauteils (100) derart ausgebildet sind, dass die Riegelköpfe (111) durch zwei in den H-Bauteilen (200) fluchtend übereinander angeordnete Riegelschlitze (209) der zweilagig angeordneten H-Bauteile (200) hindurchgreifen können.

2. Bausatz nach Anspruch 1,
**dadurch gekennzeichnet,**
**dass** die H-Bauteile (200) eine erste H-Variante (200.1) und eine zweite H-Variante (200.2) umfassen, die über die Steckverbindungen eine horizontale H-Oberfläche (206) bilden und wenigstens einen der Riegelschlitze (209) in der H-Oberfläche (206) aufweisen.

3. Bausatz nach Anspruch 2,
**dadurch gekennzeichnet,**
**dass** der Riegelschlitz (209) eine Schlitzlänge hat, die kürzer ist als eine größte Breite des Riegelkopfes (111), derart, dass die beiden Riegelelemente (109) beim Einführen in den Riegelschlitz (209) gegen die Vorspannung zueinander hingedrückt werden und nach dem Einführen in die Schließstellung zurückfedern.

4. Bausatz nach Anspruch 2 oder 3,
**dadurch gekennzeichnet,**
**dass** die erste H-Variante (200.1) und die zweite H-Variante (200.2) horizontal nebeneinander angeordnet werden können, derart, dass die Riegelschlitze (209) horizontal nebeneinander angeordnet sind.

5. Bausatz nach Anspruch 3 oder 4,
**dadurch gekennzeichnet,**
**dass** eine dritte, vierte und fünfte H-Variante (200.3, 200.4, 200.5) horizontal nebeneinander angeordnet werden können, derart, dass die Riegelschlitze (209) horizontal nebeneinander angeordnet sind.

6. Bausatz nach Anspruch 5,
**dadurch gekennzeichnet,**
**dass** die erste H-Variante (200.1) und die zweite H-Variante (200.2) über der dritten, vierten und fünften H-Variante (200.3, 200.4, 200.5) mit diesen zu einer Doppellage angeordnet sind, wobei in den übereinanderliegenden H-Varianten ausgebildete Riegelschlitze (209) fluchten.

7. Bausatz nach Ansprch 6,
**dadurch gekennzeichnet,**
**dass** die erste, zweite, dritte, vierte und fünfte H-Variante (200.1; 200.2; 200.3; 200.4; 200.5) eine unterschiedliche Länge haben, wobei im verbauten Zustand eine Fuge zwischen der erste H-Variante (200.1) und die zweite H-Variante (200.2) versetzt zu einer Fuge zwischen zwei über den wenigstens zwei horizontal nebeneinander angeordneten dritten, vierten oder fünften H-Variante (200.3; 200.4; 200.5) ist.

8. Bausatz nach einem der vorstehenden Ansprüche,
**dadurch gekennzeichnet,**
**dass** Eckbauteile (400) vorgesehen sind, wobei ein Eckbauteil (400) einen Übergang von einem V-Bauteil (100) zu einer Dachkonstruktion bildet.

9. Bausatz nach einem der vorstehenden Ansprüche,
**dadurch gekennzeichnet,**
**dass** jedes V-Bauteil (100) eine Mittellängsachse (ML) als Spiegelachse aufweist.

10. Bausatz nach Anspruch 9,
**dadurch gekennzeichnet,**
**dass** jedes V-Bauteil (100) eine Mittelquerachse (MQ) als Spiegelachse aufweist.

11. Bausatz nach Anspruch 10,
**dadurch gekennzeichnet,**
**dass** das vorspannbare Riegelelement (109) an der V-Steckseite (101; 103) in Richtung weg von der Mittellängsachse (ML) ausgebildet ist.

12. Bausatz nach einem der Ansprüche 1 oder 11,
**dadurch gekennzeichnet,**
**dass** die Riegelschlitze (209) wenigstens einen kreuzförmigen Doppel-Riegelschlitz (211) umfassen.

13. Bausatz nach einem der vorstehenden Ansprüche,
**gekennzeichnet durch**
ein Fassadenelement (800), das an wenigstens einem V-Bauteil (100) angebracht ist.

14. Bauwerk aus einem Bausatz nach einem der Ansprüche 1 bis 13.

## Claims

1. A construction kit for constructing a structure, comprising a plurality of components (100, 200, 300, 400, 500, 600, 700, 800, 900) that can be connected to one another in order to erect a statically defined structure, wherein at least one plate-shaped V-component (100) and at least two plate-shaped H-components (200) of the plurality of components (100, 200, 300, 400, 500, 600, 700, 800, 900) can be connected to one another by means of a plug-in connection, wherein
each V-component (100) has at least one plug-in side (101; 103), on which at least one locking element (109) that is provided with a locking head (111) and can be prestressed in the direction of a closed position is formed, wherein a first and a second locking slot (209) are respectively formed in the at least two plate-shaped H-components (200), and wherein one of the locking elements (109) of at least one of the V-components (100), which can be prestressed in the direction of a closed position, can respectively pass through said locking slots,
**characterized in**
**that** the plug-in sides (103, 105) of the V-component (100) are designed in such a way that the locking heads (111) can pass through two locking slots (209) of the H-components (200) that are arranged in two layers such that said locking slots in the H-components (200) are arranged on top of one another in an aligned manner.

2. The construction kit according to claim 1,
**characterized in**
**that** the H-components (200) comprise a first H-variant (200.1) and a second H-variant (200.2), which form a horizontal H-surface (206) by means of the plug-in connections and have at least one of the locking slots (209) in the H-surface (206).

3. The construction kit according to claim 2,
**characterized in**
**that** the locking slot (209) has a slot length that is shorter than a greatest width of the locking head (111) such that the two locking elements (109) are pressed toward one another against the prestress during the insertion into the locking slot (209) and spring back into the closed position after the insertion.

4. The construction kit according to claim 2 or 3,
**characterized in**
**that** the first H-variant (200.1) and the second H-variant (200.2) can be arranged horizontally side by side such that the locking slots (209) are arranged horizontally side by side.

5. The construction kit according to claim 3 or 4,
**characterized in**
**that** a third, fourth and fifth H-variant (200.3, 200.4, 200.5) can be arranged horizontally side by side such that the locking slots (209) are arranged horizontally side by side.

6. The construction kit according to claim 5,
**characterized in**
**that** the first H-variant (200.1) and the second H-variant (200.2) are arranged above the third, fourth and fifth H-variants (200.3, 200.4, 200.5) so as to form a double layer with these third, fourth and fifth H-variants, wherein locking slots (209) formed in the H-variants lying on top of one another are aligned.

7. The construction kit according to claim 6,
**characterized in**
**that** the first, second, third, fourth and fifth H-variants (200.1; 200.2; 200.3; 200.4; 200.5) have different lengths, wherein a joint between the first H-variant (200.1) and the second H-variant (200.2) is in the installed state offset in relation to a joint between two of the at least two third, fourth or fifth H-variants (200.3; 200.4; 200.5) arranged horizontally side by side.

8. The construction kit according to one of the preceding claims,
**characterized in**
**that** corner components (400) are provided, wherein a corner component (400) forms a transition from a V-component (100) to a roof construction.

9. The construction kit according to one of the preceding claims,
**characterized in**
**that** each V-component (100) has a mirror axis in the form of a central longitudinal axis (ML).

10. The construction kit according to claim 9,
**characterized in**
**that** each V-component (100) has a mirror axis in the form of a central transverse axis (MQ).

11. The construction kit according to claim 10,
**characterized in**
**that** the prestressable locking element (109) is formed on the V-plug-in side (101; 103) in the direction away from the central longitudinal axis (ML).

12. The construction kit according to one of claims 1 or 11,
**characterized in**
**that** the locking slots (209) comprise at least one cruciform double locking slot (211).

13. The construction kit according to one of the preceding claims,
**characterized by**
a facade element (800) that is attached to at least one V-component (100).

14. A structure consisting of a construction kit according to one of claims 1 to 13.

## Revendications

1. Ensemble d'éléments à monter pour la construction d'un ouvrage, avec une pluralité d'éléments de construction (100, 200, 300, 400, 500, 600, 700, 800, 900), qui peuvent être reliés les uns aux autres pour ériger un ouvrage statiquement déterminé, sachant qu'au moins un élément de construction en V (100) en forme de plaque et au moins deux éléments de construction en H (200) en forme de plaque de la pluralité d'éléments de construction (100, 200, 300, 400, 500, 600, 700, 800, 900) peuvent être reliés entre eux au moyen d'un raccord par emboîtement , sachant que
chaque élément de construction en V (100) comporte au moins un côté d'emboîtement (101, 103) sur lequel au moins un élément de verrouillage (109) pouvant être précontraint en direction d'une position de fermeture est constitué avec une tête de verrouillage (111), sachant que dans au moins deux éléments de construction en H en forme de plaque (200) est constituée respectivement une première et une deuxième fente de verrouillage (209) à travers lesquelles un des éléments de verrouillage (109) pouvant être précontraint dans le sens d'une position de fermeture peut traverser au moins un des éléments de construction en V (100),
**caractérisé en ce que**
les côtés d'emboîtement (103, 105) de l'élément de construction en V (100) sont constitués de telle manière que les têtes de verrouillage (111) peuvent passer à travers deux fentes de verrouillage (209) disposées l'une sur l'autre en alignement dans les éléments de construction en H (200) des éléments de construction (200) disposés en deux couches.

2. Ensemble d'éléments à monter selon la revendication 1,
**caractérisé en ce que**
les éléments de construction en H (200) comprennent une première variante en H (200.1) et une deuxième variante en H (200.2), qui forment une surface en H horizontale (206) par le biais des raccords d'emboîtement et comportent au moins une des fentes de verrouillage (209) dans la surface en H (206).

3. Ensemble d'éléments à monter selon la revendication 2,
**caractérisé en ce que**
la fente de verrouillage (209) possède une longueur de fente, qui est plus courte qu'une largeur la plus grande de la tête de verrouillage (111) de telle manière que les deux éléments de verrouillage (109) sont comprimés l'un contre l'autre lors de l'introduction dans la fente de verrouillage (209) en opposition à la précontrainte et après l'introduction reviennent en arrière dans la position de fermeture.

4. Ensemble d'éléments à monter selon la revendication 2 ou 3,
**caractérisé en ce que**
la première variante en H (200.1) et la deuxième variante en H (200.2) peuvent être disposées horizontalement l'une à côté de l'autre, de telle manière que les fentes de verrouillage (209) sont disposées horizontalement l'une à côté de l'autre.

5. Ensemble d'éléments à monter selon la revendication 3 ou 4,
**caractérisé en ce qu'**
une troisième, quatrième et cinquième variante en H (200.3, 200.4, 200.5) peuvent être disposées horizontalement l'une à côté de l'autre de telle manière que les fentes de verrouillage (209) sont disposées horizontalement l'une à côté de l'autre.

6. Ensemble d'éléments à monter selon la revendication 5,
**caractérisé en ce que**
la première variante en H (200.1) et la deuxième variante en H (200.2) sont disposées sur les troisièmes, quatrièmes et cinquièmes variantes en H (200.3, 200.4, 200.5) avec celles-ci en une couche double, sachant que des fentes de verrouillage (209) constituées sont alignées dans les variantes en H superposées.

7. Ensemble d'éléments à monter selon la revendication 6,
**caractérisé en ce que**
la première, la deuxième, la troisième, la quatrième et la cinquième variante en H (200.1, 200.2, 200.3, 200.4, 200.5) possèdent une longueur différente, sachant qu'à l'état monté, un joint entre la première variante (200.1) et la deuxième variante en H (200.2) est décalé par rapport à un joint entre deux variantes en H sur les au moins deux troisièmes, quatrièmes ou cinquièmes (200.3, 200.4, 200.5) disposées horizontalement l'une à côté de l'autre.

8. Ensemble d'éléments à monter selon l'une quelconque des revendications précédentes,
**caractérisé en ce que**
des éléments de construction d'angle (400) sont prévus, sachant qu'un élément de construction d'angle (400) forme une transition d'un élément de construction en V (100) à une construction de toit.

9. Ensemble d'éléments à monter selon l'une quelconque des revendications précédentes,
**caractérisé en ce que**
chaque élément de construction en V (100) comporte un axe longitudinal médian (ML) en tant qu'axe de symétrie.

10. Ensemble d'éléments à monter selon la revendication 9,
**caractérisé en ce que**
chaque élément de construction en V (100) comporte un axe transversal médian (MQ) en tant qu'axe de symétrie.

11. Ensemble d'éléments à monter selon la revendication 10,
**caractérisé en ce que**
l'élément de verrouillage pouvant être précontraint (109) est constitué sur le côté d'emboîtement en V (101, 103) dans le sens s'éloignant de l'axe longitudinal médian (ML).

12. Ensemble d'éléments à monter selon l'une quelconque des revendications 1 ou 11,
**caractérisé en ce que**
les fentes de verrouillage (209) comprennent au moins une fente de verrouillage double en forme de croix (211).

13. Ensemble d'éléments à monter selon l'une quelconque des revendications précédentes,
**caractérisé par**
un élément de façade (800), qui est monté sur au moins un élément de construction en V (100).

14. Ouvrage composé d'un ensemble d'éléments à monter selon l'une quelconque des revendications 1 à 13.
